# EUROPEAN PATENT APPLICATION

(11) **EP 4 606 754 A1**
(43) Date of publication of application: **27.08.2025**
(21) Application number: 25158507.1
(22) Date of filing: 18.02.2025
(51) Int. Cl.: B66B 5/00, F16P 3/14, G01V 8/20

(54) **ORTHOGONALLY ALIGNED SAFETY NET FOR ELEVATOR SYSTEM**

(30) Priority: 22.02.2024 US 202418584522
(71) Applicant: Otis Elevator Company, Farmington, Connecticut 06032 (US)
(72) Inventor: AUXIER, James Tilsley, Farmington, 06032 (US); SIEWERT, Bryan Robert, Farmington, 06032 (US)
(74) Representative: Schmitt-Nilson Schraud Waibel Wohlfrom Patentanwälte Partnerschaft mbB

(57) **Abstract**

A sensor enclosure assembly is provided for a safety net system for an elevator system. The sensor enclosure assembly includes a single enclosure disposable in one of an elevator shaft, an elevator pit, an entrance area for the elevator pit and an elevator pit entrance area of the elevator system, multiple sensors mounted orthogonally with respect to one another in the single enclosure, each of the multiple sensors being configured to perform sensing and to generate data corresponding to sensing results and circuitry disposed in the single enclosure to support performance of the sensing by each of the multiple sensors.

## Description

The present disclosure relates to elevator systems and, in particular, to an elevator system with orthogonally aligned sensors.

In an elevator system, an elevator shaft is built into a building and an elevator car travels up and down along the elevator shaft to arrive at landing doors of different floors of the building. The movement of the elevator is driven by a machine that is controlled by a controller according to instructions received from users of the elevator system. An elevator pit is the space between the elevator shaft's lowest landing door and the ground at the bottom of the elevator shaft. The elevator pit typically includes a concrete base slab and certain mechanisms of the elevator system and is typically bordered by four walls. The elevator pit can be accessed by authorized personnel (i.e., a service technician) via a pit ladder.

The elevator car should generally be removed from the elevator pit and the elevator system should be non-operative while anyone is accessing the elevator shaft. Likewise, the elevator car should generally be removed from the elevator pit and the elevator system should be non-operative while anyone is accessing the elevator pit.

A sensor enclosure assembly is provided for a safety net system for an elevator system. The sensor enclosure assembly includes a single enclosure disposable in one of an elevator shaft, an elevator pit, an entrance area for the elevator pit and an elevator pit entrance area of the elevator system, multiple sensors mounted orthogonally with respect to one another in the single enclosure, each of the multiple sensors being configured to perform sensing and to generate data corresponding to sensing results and circuitry disposed in the single enclosure to support performance of the sensing by each of the multiple sensors.

Particular embodiments further may include at least one, or a plurality of, the following optional features, alone or in combination with each other:
In accordance with additional or alternative embodiments, each of the multiple sensors is a LiDAR sensor.

In accordance with additional or alternative embodiments, each of the multiple sensors is a millimeter wave RADAR sensor.

In accordance with additional or alternative embodiments, each of the multiple sensors is an RGBD camera.

In accordance with additional or alternative embodiments, each of the multiple sensors is one of a LiDAR sensor, a RADAR sensor or a camera.

In accordance with additional or alternative embodiments, the single enclosure includes a field-of-view (FOV) alignment feature for adjusting an FOV for each of the multiple sensors.

In accordance with additional or alternative embodiments, the multiple sensors include two or more sensors mounted orthogonally with respect to one another.

In accordance with additional or alternative embodiments, the circuitry includes a power supply, a printed circuit board (PCB), multiple connections and cabling shared among each of the multiple sensors.

According to an aspect of the disclosure, a safety net system is provided for an elevator system including an elevator shaft, an elevator pit and an elevator pit entrance area. The safety net system includes a single enclosure disposable in one of the elevator shaft, the elevator pit and the elevator pit entrance area, multiple sensors mounted orthogonally with respect to one another in the single enclosure, each of the multiple sensors being configured to perform sensing and to generate data corresponding to sensing results, circuitry disposed in the single enclosure to support performance of the sensing by each of the multiple sensors and a processor coupled to each of the multiple sensors and configured to analyze whether the data indicates a person entering or occupying the one of the elevator shaft, the elevator pit and the elevator pit entrance area and to take an action based on analysis results.

Particular embodiments further may include at least one, or a plurality of, the following optional features, alone or in combination with each other:
In accordance with additional or alternative embodiments, each of the multiple sensors is one of a LiDAR sensor, a RADAR sensor or a camera.

In accordance with additional or alternative embodiments, the single enclosure includes a field-of-view (FOV) alignment feature for adjusting an FOV for each of the multiple sensors.

In accordance with additional or alternative embodiments, the single enclosure is provided as two single enclosures disposed at opposite corners of the one of the elevator shaft, the elevator pit and the elevator pit entrance area and, for each of the two single enclosures, the multiple sensors include two or more sensors mounted orthogonally with respect to one another.

In accordance with additional or alternative embodiments, the circuitry includes a power supply, a printed circuit board (PCB), multiple connections and cabling shared among each of the multiple sensors.

In accordance with additional or alternative embodiments, each of the multiple sensors is configured to generate the data as point cloud data from one or more sensing operations and the processor is configured to analyze the point cloud data from the one or more sensing operations, various learned backgrounds, external switch information, car information, timing information and car location and movement information and to determine whether the point cloud data from the one or more sensing operations is indicative of the person entering or occupying the one of the elevator shaft, the elevator pit and the elevator pit entrance area.

In accordance with additional or alternative embodiments, the elevator shaft is a non-rectangular elevator shaft, the elevator pit is a non-rectangular elevator pit and the elevator pit entrance area is a non-rectangular elevator pit entrance area.

According to an aspect of the disclosure, a safety net system is provided for an elevator system including an elevator car which is movable in an elevator shaft. The safety net system includes a single enclosure disposed at a top of the elevator car, multiple sensors mounted orthogonally with respect to one another in the single enclosure, each of the multiple sensors being configured to perform sensing and to generate data corresponding to sensing results, circuitry disposed in the single enclosure to support performance of the sensing by each of the multiple sensors and a processor coupled to each of the multiple sensors and configured to analyze whether the data indicates a person being present at the top of the elevator car or extending a portion of their body or tools outside of a projection of the elevator car and to take an action based on analysis results.

In accordance with additional or alternative embodiments, each of the multiple sensors is one of a LiDAR sensor, a RADAR sensor or a camera.

In accordance with additional or alternative embodiments, the single enclosure includes a field-of-view (FOV) alignment feature for adjusting an FOV for each of the multiple sensors.

In accordance with additional or alternative embodiments, the single enclosure is provided as two single enclosures at opposite corners at the top of the elevator car.

In accordance with additional or alternative embodiments, the circuitry includes a power supply, a printed circuit board (PCB), multiple connections and cabling shared among each of the multiple sensors, each of the multiple sensors is configured to generate the data as point cloud data from one or more sensing operations and the processor is configured to analyze the point cloud data from the one or more sensing operations, various learned backgrounds, external switch information, car information, timing information and car location and movement information and to determine whether the point cloud data from the one or more sensing operations is indicative of the person being present at the top of the elevator car or extending the portion of their body or tools outside of a projection of the elevator car.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2 is a perspective view of an elevator pit of the elevator system of FIG. 1 in accordance with embodiments;
FIG. 3 is a top-down schematic view of components of a safety net system including orthogonally aligned sensors whose field-of-view (FOV) can be in and out of the illustrated image in the figure in accordance with embodiments;
FIG. 4 is a schematic view of a single enclosure for multiple sensors of the safety net system in accordance with embodiments;
FIG. 5 is a schematic diagram of components of the single enclosure of FIG. 4 in accordance with embodiments;
FIG. 6 are top-down views of elevator shafts and elevator cars with varying shapes that the safety net system and the single enclosure of FIGS. 3-5 can be used with in accordance with embodiments; a
FIG. 7 is a top-down schematic illustration of a single enclosure for multiple sensors of the safety net system in accordance with embodiments;
FIG. 8 is a top-down view schematic illustration of the single enclosure of FIG. 7 with a capability for the multiple sensors to be adjusted in accordance with embodiments;
FIG. 9 is a perspective view illustrating a mounting of a single enclosure for multiple sensors at a ceiling of an elector car of the safety net system where the multiple sensors are orthogonally aligned sensors whose field-of-view (FOV) can be in and out of the illustrated image in the figure in accordance with embodiments;
FIGS. 10A and 10B are perspective views illustrating a mounting of a single enclosure for three sensors of the safety net system where the three sensors are orthogonally aligned sensors whose field-of-view (FOV) can be in and out of the illustrated image in the figure in accordance with embodiments; and
FIG. 11 is a perspective view illustrating a mounting of a single enclosure for multiple sensors at an elevator pit of the safety net system in accordance with embodiments.

In the elevator industry, multiple monitors and sensors are provided to monitor various parts and components of an elevator system. Particularly, critical areas to monitor are the elevator shaft and the elevator pit, which service technicians and mechanics enter to perform maintenance and service tasks. A cost-effective way of detecting a person, such as a service technician or a mechanic, who has entered the elevator shaft or the elevator pit is therefore needed. Such a detection system needs to be easy to install and adjusted and needs to require minimal service and maintenance. The detection system must also have high detection performance with low false positive and negative outcomes.

Thus, as will be described below, an elevator system is provided with a safety net formed of orthogonally aligned sensors. The safety net includes, for example, two or more sensors (i.e., LiDAR sensors) in one enclosure that are mounted orthogonally to each other in a combined sensing unit. For this combined sensing unit, the sensors may share a power supply, a printed circuit board (PCB), connections and cabling. A fine field-of-view (FOV) alignment adjustment feature may also be provided, for instance via set screws, in the high likelihood of cases where the railing may not be at a perfect right angle or to accommodate less than optimal mounting. If the sensing unit utilizes one communication cable for two sensors, the images or point clouds may be combined into one signal via concatenation, interlacing, alternation or other means of digital data merger that allows for later easy differentiation, or they may use separate wire groups in the same cable.

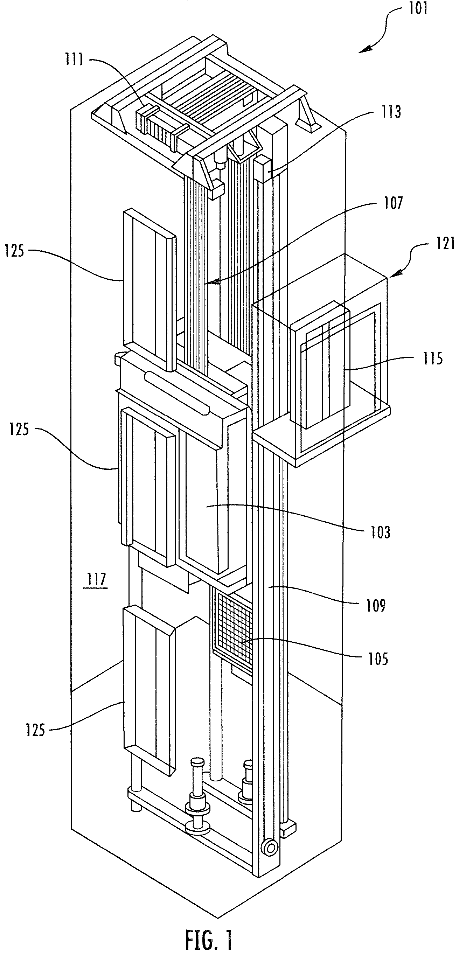

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processorbased machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

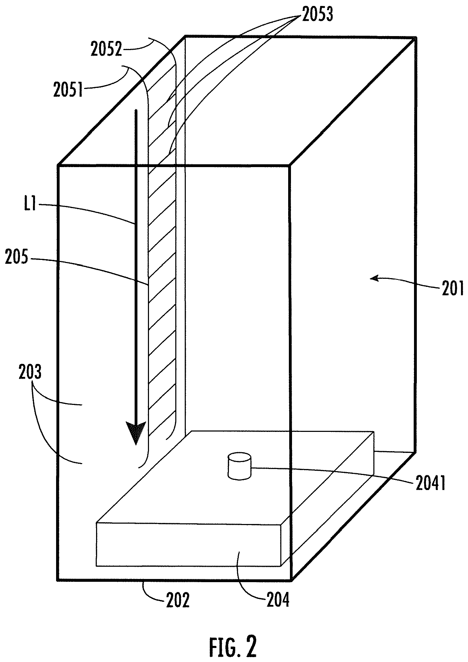

With continued reference to FIG. 1 and with additional reference to FIG. 2, a bottom portion of the elevator shaft 117 of elevator system 101, which is below the lowest one of the landings 125, is provided as an elevator pit 201. The elevator pit 201 can include a base 202, four surrounding elevator pit walls 203, a base part 204, which can include or be provided as a slab and one or more components 2041 that are provided for supporting an elevator car 103, and an elevator pit ladder 205. The elevator pit ladder 205 extends from an upper portion of the elevator pit 201 to a lower portion of the elevator pit 201 and allows a service technician or mechanic (hereinafter referred to as a "mechanic") to access the elevator pit 201. The elevator pit ladder 205 is adjacent to one of the elevator pit walls 203 and includes vertical members 2051, 2052 and rungs 2053 extending between the vertical members 2051, 2052. When a mechanic is inside the elevator pit 201 or standing on the elevator pit ladder 205 (i.e., standing on one of the rungs 2053 of the elevator pit ladder 205), the elevator car 103 should typically be removed from the elevator pit 201 and generally prevented from entering the elevator pit 201 except in cases of certain maintenance procedures.

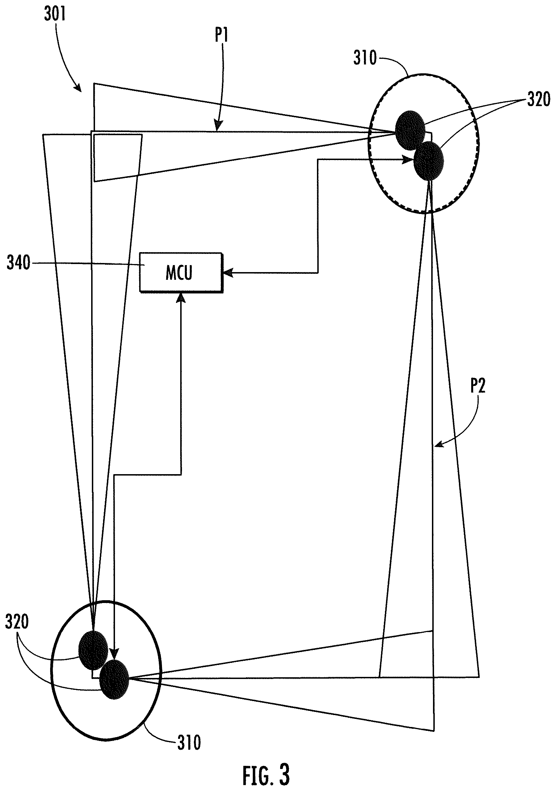

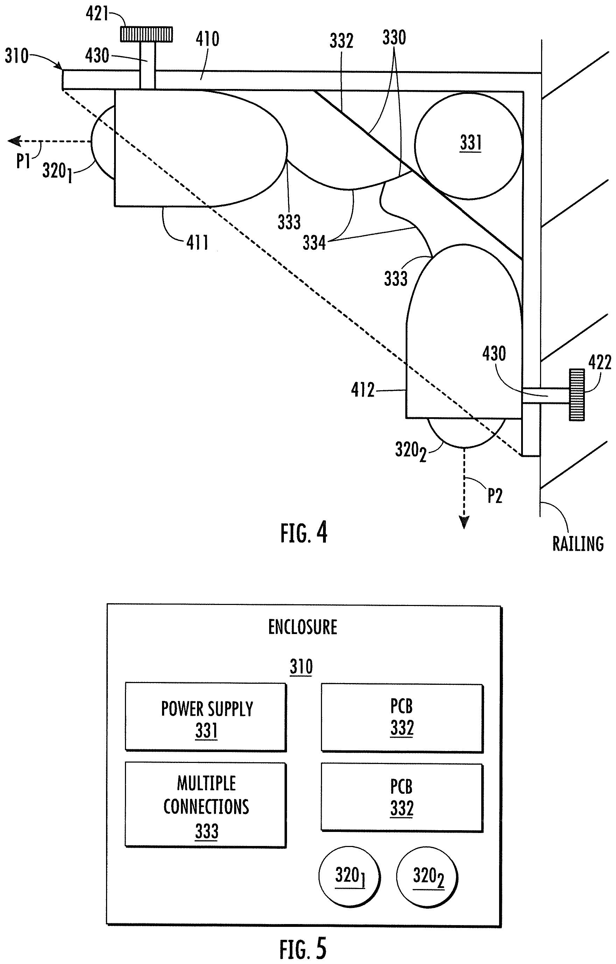

With continued reference to FIGS. 1 and 2 and with additional reference to FIG. 3 and FIG. 4, a safety net system 301 is provided for an elevator system, such as the elevator system 101. The safety net system 301 includes a single enclosure 310 that is disposable at a top of the elevator car 103 and/or in one of the elevator shaft 117, the elevator pit 201 and an entrance area for the elevator pit 201 (i.e., the elevator pit ladder 205 of FIG. 2), hereinafter referred to as an "entrance area." The safety net system 301 further includes multiple sensors 320 that are mounted orthogonally with respect to one another in the single enclosure 310, circuitry 330 and a processor 340.

In accordance with additional embodiments, each of the multiple sensors 320 can include or be provided with an additional processor. The additional processors of each of the multiple sensors 320 can be independent from and/or operable in concert with the processor 340.

For the case of the single enclosure 310 being provided at the top of the elevator car 103, each of the multiple sensors 320 is configured to perform sensing relating to whether a person is present at the top of the elevator car 103 and/or whether the person is extending any portion of their body or tools outside of the projection of the elevator car 103 during motion and to generate data corresponding to sensing results (hereinafter, for the purposes of clarity and brevity, the description and the claims will refer to the case of the person being present at the top of the elevator car as a generic way to describe the person extending any portion of their body or tools). The circuitry 330 is disposed in the single enclosure 310 to support performance of the sensing by each of the multiple sensors 320. The processor 340 is disposed in signal communication with or otherwise coupled to each of the multiple sensors 320 and is configured to analyze whether the data generated by each of the multiple sensors 320 indicates or is indicative of the person being present at the top of the elevator car 103 and to take an action based on analysis results.

In addition, for the case of the single enclosure 310 being provided at the top of the elevator car 103, the single enclosure 310 can be provided as two or more single enclosures 310 at opposite corners of the top of the elevator car 103 with each of the single enclosures 310 including two or more (i.e., multiple) orthogonally oriented sensors 320. This configuration is illustrated schematically in FIG. 3, in which it is to be understood that the field-of-view (FOV) of each of the multiple sensors 320 can be into and out of the plane of the image.

For the case of the single enclosure 310 being provided in the one of the elevator shaft 117, the elevator pit 201 and the entrance area, each of the multiple sensors 320 is configured to perform sensing relating to whether a person is entering or occupying the one of the elevator shaft 117, the elevator pit 201 and the entrance area and to generate data corresponding to sensing results. The circuitry 330 is disposed in the single enclosure 310 to support performance of the sensing by each of the multiple sensors 320. The processor 340 is disposed in signal communication with or otherwise coupled to each of the multiple sensors 320 and, as above, is configured to analyze whether the data generated by each of the multiple sensors 320 indicates or is indicative of a person entering or occupying the one of the elevator shaft 117, the elevator pit 201 and the entrance area and to take an action based on analysis results.

The processor 340 includes a processing unit, a memory and an input/output (I/O) unit by which the processor 340 is communicative with each of the multiple sensors 320 and at least the controller 115 (see FIG. 1). The memory has executable instructions stored thereon, which are readable and executable by the processing unit. When the processing unit reads and executes the executable instructions, the executable instructions cause the processor to operate as described herein. In accordance with embodiments, the executable instructions may include a machine-learning algorithm, which improves certain operations of the processing unit over time. The processor 340 can be remote from the single enclosure 310 and each of the multiple sensors 320 or local (i.e., disposed within the single enclosure 310). In the former case, the processor 340 can be operably coupled to each of the multiple sensors 320 via a wired connection or via a wireless connection. In the latter case, the processor 340 can be built into the single enclosure 310 as a separate component from each of the multiple sensors 320 and can be operably coupled to each of the multiple sensors 320 via a wired connection or via a wireless connection.

In accordance with embodiments, each of the multiple sensors 320 can include or be provided as one or more of a light detection and ranging or a laser imaging, detection, and ranging (LiDAR) sensor, a radio detection and ranging (RADAR) sensor and/or a camera. In accordance with further embodiments, each of the multiple sensors 320 can be provided as one or more of a 2D or 3D LiDAR sensor, a millimeter wave RADAR sensor and/or a red, green, blue, depth (RGBD) camera. In accordance with still further embodiments, each of the multiple sensors 320 can be provided as plural sensors including a combination of one or more sensor types listed herein.

In the exemplary case of each of the multiple sensors 320 being a 2D or 3D LiDAR sensor, the multiple sensors 320 are configured to sense orthogonal planes P1, P2 where P1 and P2 are each 2D or 3D planes. In these or other cases, the multiple sensors 320 are configured to generate the data as point cloud data using a single scan for image processing, multiple scans for image processing and/or multiple successive or continuous scans for video processing with the processor 340 being configured to analyze the point cloud data and to determine whether the point cloud data is indicative of the person being present at the top of the elevator car 103 and to take an action based on analysis results and/or the person entering or occupying the one of the elevator shaft 117, the elevator pit 201 and the entrance area and to take an action based on analysis results.

For example, in the case of the multiple sensors 320 being disposed in the entrance area, the point cloud data can include hit points at which a part of the person intersects with plane P1 or plane P2, additional points at which no portion of any object intersects with plane P1 or P2 and false points at which portions of foreign objects or debris intersect with plane P1 or P2. The processor 340 analyzes each of the hit points, the additional points and the false points, identifies the hit points as hit points from their characteristic shape and their grouping, the additional points as additional points from their signal match to a baseline data set (i.e., taken when the entrance area is known to be empty or, more generally, to have certain physical characteristics) and the false points as false points from their characteristic shapes or lack thereof and their grouping or lack thereof. The processor 340 then distinguishes the hit points from the additional points and the false points and determines that, when the hit points of the point cloud data are identified and distinguished, the hit points are indicative of the person in the entrance area. The processor 340 can then communicate that finding with at least the controller 115 of the elevator system 101 so that the controller 115 can act, such as by preventing the elevator car 103 from entering the elevator pit 201.

Since the processor 340 can identify and distinguish the hit points from the additional points, an incidence of false negative determinations of the safety net system 301 is reduced. Likewise, since the processor 340 can identify and distinguish the hit points from the false points, an incidence of false positive determinations of the safety net system 301 is also reduced. When the executable instructions stored on the memory unit of the processor 340 include a machine-learning algorithm, the ability of the processor 340 to identify and distinguish the hit points from the additional points and the false points can improve over time and the incidence of the false negative and false positive determinations of the safety net system 301 can be continually reduced over time in a corresponding manner.

The following description will relate to the case of there being two sensors 320 (i.e., first and second sensors 3201, 3202) disposed within the single enclosure 310. This is being done for purposes of clarity and brevity and it is to be understood that two or more sensors can be included in the single enclosure 310.

As shown in FIG. 4, the single enclosure 310 can include a housing 410 with first and second mountings 411, 412 for first and second sensors 3201, 3202, respectively, and FOV alignment features 421, 422 for adjusting an FOV for each of the first and second sensors 3201, 3202. In these or other cases, the FOV alignment features 421, 422 can include or be provided as sets of screws 430 for each of the first and second sensors 3201, 3202 at each of the first and second mountings 411, 412 where each screw 430 adjusts an orientation of the corresponding one of the first and second sensors 3201, 3202 or the first and second mountings 421, 422 in a given plane. This can be particularly useful in instances in which a structural feature to which the single enclosure 310 is attached is not properly aligned, such as a railing that is not at a perfect right angle.

As shown in FIG. 4, the single enclosure 310 and the housing 410 can be disposed generally at an exterior of a rail of the elevator system.

With reference to FIGS. 4 and 5, the circuitry 330 disposed in the single enclosure 310 can include a power supply 331, a PCB 332, multiple connections 333 and cabling 334 that can all be shared among each of the first and second sensors 3201, 3202. With this construction, especially where components are shared by the first and second sensors 3201, 3202, the data generated by each of the first and second sensors 3201, 3202 can be combined into a single signal for analysis and processing by the processor 340.

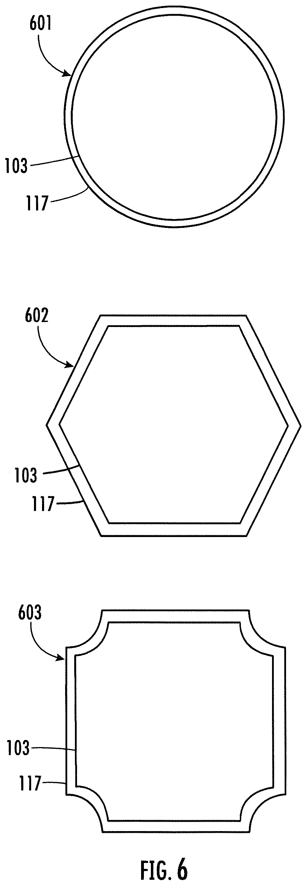

With reference to FIG. 6, it is to be understood that the elevator shaft 117, the elevator pit 201 and the entrance area (as well as the elevator car 103 and all other components of the elevator system 101) need not be rectangular or square. For example, as shown in FIG. 6, the elevator shaft 117 in particular can be annular 601, hexagonal 602, or irregularly shaped 603. In these or other cases, the single enclosure 310 and the multiple sensors 320 of FIGS. 3-5 can be disposed in one of the nonrectangular elevator shaft, the non-rectangular elevator pit and the non-rectangular entrance area.

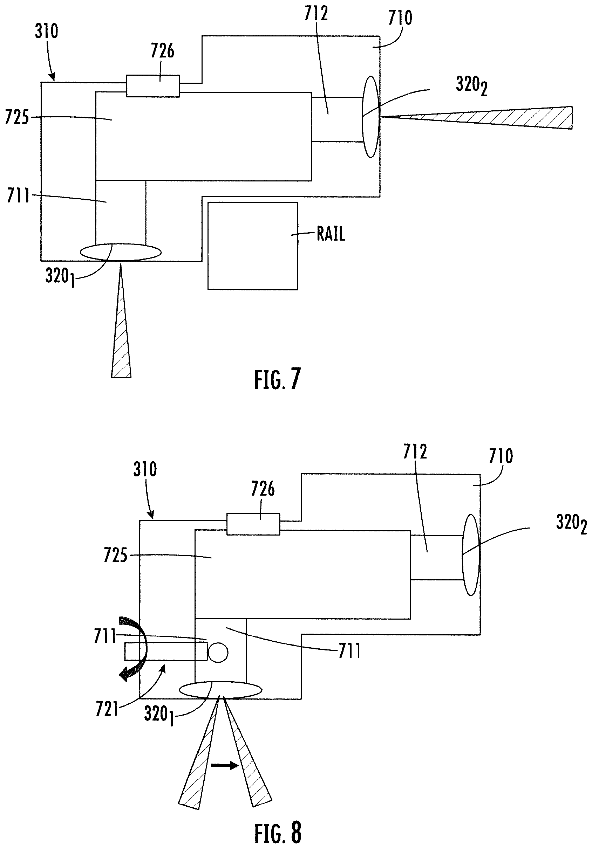

With reference to FIGS. 7 and 8 and in accordance with embodiments, the single enclosure 310 can include a housing 710 with first and second mountings 711, 712 for first and second sensors 3201, 3202 (presented in FIGS. 7 and 8 as lenses) respectively, and field-of-view (FOV) alignment features 721 (see FIG. 8) for adjusting an FOV for each of the first and second sensors 3201, 3202. The single enclosure 310 can further include a PCB 725 shared between the first and second sensors 3201, 3202 and a terminal 726 for communications and power. In these or other cases, the FOV alignment features 721 of FIG. 8 can include or be provided as sets of screws 730 for each of the first and second sensors 3201, 3202 at each of the first and second mountings 711, 712 where each screw 730 adjusts an orientation of the corresponding one of the first and second sensors 3201, 3202 or the first and second mountings 721, 722 in a given plane. This can be particularly useful in instances in which a structural feature to which the single enclosure 310 is attached is not properly aligned, such as a railing that is not at a perfect right angle.

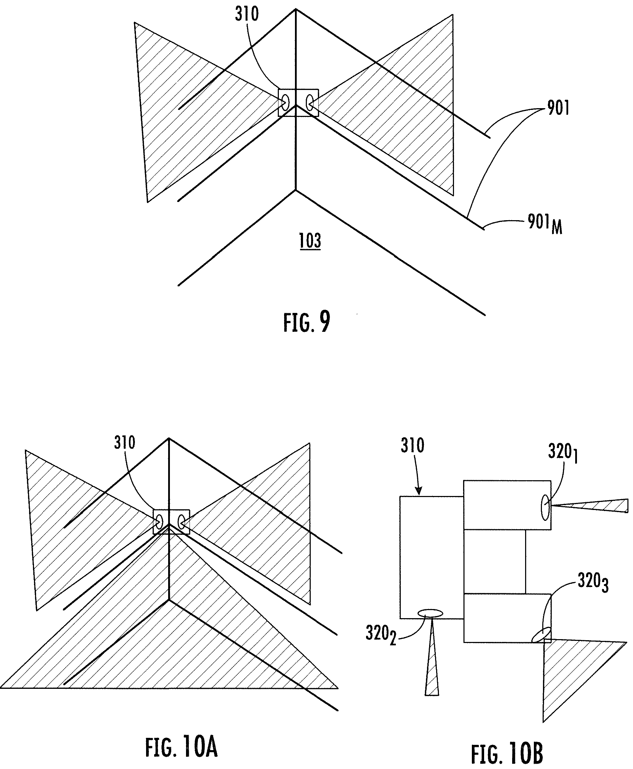

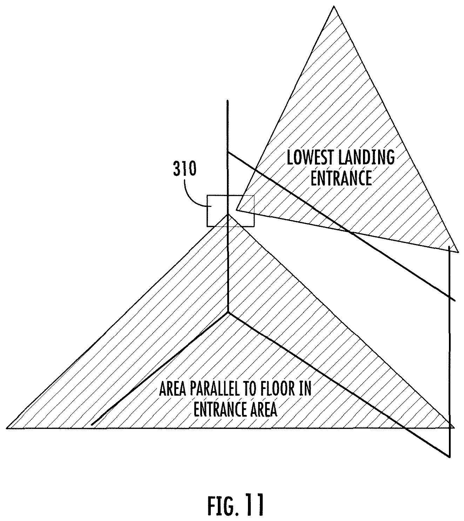

With reference to FIGS. 9, 10A and 10B and FIG. 11, the single enclosure 310 can be positioned for example above a ceiling of an elevator car 103. Asshown in FIG. 9, in these or other cases, the single enclosure 310 can be disposed just outside of the rails 901 and at, above or below the mid-rail 901M. As shown in FIGS. 10A and 10B, the single enclosure 310 can be provided for three sensors 3201, 3202, 3203 all of which are disposed transversely or orthogonally with respect to one another with FOVs that can extend into and out of the plane of the image. As shown in FIG. 11, the single enclosure 310 with first and second sensors 3201, 3202 in the entrance area could use one sensor to cover an area parallel to the floor and another to cover an area parallel to the lowest landing entrance.

Technical effects and benefits of the present disclosure are the provision of a safety net system for an elevator system that has lower sensing unit costs via shared electronic and physical components, lower installation times and potential for reduced cable counts to main control and processing units.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A sensor enclosure assembly for a safety net system for an elevator system, the sensor enclosure assembly comprising:
a single enclosure disposable in one of an elevator shaft, an elevator pit, an entrance area for the elevator pit and an elevator pit entrance area of the elevator system;
multiple sensors mounted orthogonally with respect to one another in the single enclosure, each of the multiple sensors being configured to perform sensing and to generate data corresponding to sensing results; and
circuitry disposed in the single enclosure to support performance of the sensing by each of the multiple sensors.

2. The sensor enclosure assembly according to claim 1, wherein each of the multiple sensors comprises any of: a LiDAR sensor, a millimeter wave RADAR sensor, an RGBD camera.

3. The sensor enclosure assembly according to claim 1 or 2, wherein each of the multiple sensors is one of a LiDAR sensor, a RADAR sensor or a camera.

4. The sensor enclosure assembly according to any of claims 1 to 3, wherein the single enclosure comprises a field-of-view (FOV) alignment feature for adjusting an FOV for each of the multiple sensors.

5. The sensor enclosure assembly according to any of claims 1 to 4, wherein the multiple sensors comprise two or more sensors mounted orthogonally with respect to one another.

6. The sensor enclosure assembly according to any of claims 1 to 5, wherein the circuitry comprises a power supply, a printed circuit board (PCB), multiple connections and cabling shared among each of the multiple sensors.

7. A safety net system for an elevator system comprising an elevator shaft, an elevator pit and an elevator pit entrance area, the safety net system comprising the sensor enclosure assembly of any of claims 1 to 6; and
a processor coupled to each of the multiple sensors and configured to analyze whether the data indicates a person entering or occupying the one of the elevator shaft, the elevator pit and the elevator pit entrance area and to take an action based on analysis results.

8. The safety net system according to claim 7, wherein:
the single enclosure is provided as two single enclosures disposed at opposite corners of the one of the elevator shaft, the elevator pit and the elevator pit entrance area, and,
for each of the two single enclosures, the multiple sensors comprise two or more sensors mounted orthogonally with respect to one another.

9. The safety net system according to claim 8, wherein the circuitry comprises a power supply, a printed circuit board (PCB), multiple connections and cabling shared among each of the multiple sensors.

10. The safety net system according to any of claims 7 to 9, wherein:
each of the multiple sensors is configured to generate the data as point cloud data from one or more sensing operations, and
the processor is configured to analyze the point cloud data from the one or more sensing operations, various learned backgrounds, external switch information, car information, timing information and car location and movement information and to determine whether the point cloud data from the one or more sensing operations is indicative of the person entering or occupying the one of the elevator shaft, the elevator pit and the elevator pit entrance area.

11. The safety net system according to any of claims 7 to 10, wherein the elevator shaft is a non-rectangular elevator shaft, the elevator pit is a non-rectangular elevator pit and the elevator pit entrance area is a non-rectangular elevator pit entrance area.

12. The safety net system for an elevator system according to any of claims 7 to 11, comprising an elevator car which is movable in an elevator shaft; wherein:
the single enclosure is disposed at a top of the elevator car;
multiple sensors are mounted orthogonally with respect to one another in the single enclosure, each of the multiple sensors being configured to perform sensing and to generate data corresponding to sensing results;
circuitry is disposed in the single enclosure to support performance of the sensing by each of the multiple sensors; and
the processor is coupled to each of the multiple sensors and configured to analyze whether the data indicates a person being present at the top of the elevator car or extending a portion of their body or tools outside of a projection of the elevator car and to take an action based on analysis results.

13. The safety net system according to claim 12, wherein the single enclosure is provided as two single enclosures at opposite corners at the top of the elevator car.

14. The safety net system according to claim 12 or 13, wherein:
the circuitry comprises a power supply, a printed circuit board (PCB), multiple connections and cabling shared among each of the multiple sensors,
each of the multiple sensors is configured to generate the data as point cloud data from one or more sensing operations, and
the processor is configured to analyze the point cloud data from the one or more sensing operations, various learned backgrounds, external switch information, car information, timing information and car location and movement information and to determine whether the point cloud data from the one or more sensing operations is indicative of the person being present at the top of the elevator car or extending the portion of their body or tools outside of a projection of the elevator car.
